# EUROPEAN PATENT APPLICATION

(11) **EP 2 737 962 A1**
(43) Date of publication of application: **04.06.2014**
(21) Application number: 12425192.7
(22) Date of filing: 30.11.2012
(51) Int. Cl.: B21B 31/07, F16C 23/06

(54) **Quick rotating shaft clamping**

(71) Applicant: Siemens S.p.A., 20126 Milano (IT)
(72) Inventor: Introini, Mauro, 21010 Cardano al Campo (VA) (IT)
(74) Representative: Capré, Didier

(57) **Abstract**

The present invention discloses a bearing assembly (2) for supporting a rotating shaft (1), said bearing assembly (2) comprising a housing (21) adapted for being fixed to a stand, said housing (21) surrounding a first cylindrical element (25) and a second cylindrical element (26), each able to move compared to the housing (21), the first cylindrical element (25) being fix in rotation and able to move along an axial direction that is parallel to the rotation axis (A) of the rotating shaft (1) when the latter is supported by said bearing assembly (2), and said second cylindrical element (26) being supported by said first cylindrical element (25), free in rotation, and drivable in rotation by said rotating shaft (1) when the latter is supported by the bearing assembly (2), and able to transmit the axial movement of the first cylindrical element (25) along said axial direction to the rotating shaft (1) by means of a clamping system (261, 262).

## Description

The present invention relates generally to rotating shaft and bearing assembly for rotatably supporting the rotating shaft, and is concerned in particular with an improved mechanical lock for quickly clamping the shaft to its bearing assembly. Preferentially, the rotating shaft is a rolling mill roll.

A typical rotating shaft as used in a rolling mill is a revolving cylinder comprising a longitudinal axis of rotation which is also the revolving axis, and is ended by one or several reduced diameter cylindrical sections, wherein at least one of said sections is designed for being supported by cylindrical roller bearings of a bearing assembly allowing a free axial rotation of the shaft, and the last section being an end section generally secured to a rotating flange of the bearing assembly by means of one or several bolts.

In general, rotating shafts, e.g. of the type of rolling mill roll, are subject to radial and axial loads that are transmitted to the bearing assembly, which is designed for controlling and adjusting the axial displacement of the rotating shaft. Usually, the axial displacement control is done by zeroing the axial movement of the rotating shaft, notably by means of tapered roller bearings configured for allowing almost null play in axial direction. Unfortunately, the complexity of the bearing assemblies supporting the rotating shaft of rolling mill makes then the replacement of said shaft a tedious and complex process, and generally, axial adjustment of the shaft is only possible upon a certain limit of axial load and often requires dedicated tools and mechanical fitters for the shaft replacement. In other words, no bearing assembly configured for supporting rotating shafts designed for high loads constraints, in particular suitable for being used in a rolling mill, allows at the same time a control of an undesired rotating shaft axial play, an adjustment of a rotating shaft axial displacement, and a quick assembly/disassembly of the rotating shaft.

An objective of the present invention is therefore to propose a bearing assembly and a rotating shaft that satisfy the three requirements of a control of an undesired shaft axial play, an adjustment of a shaft axial displacement, and a quick assembly/disassembly of the shaft, wherein preferentially, the rotating shaft and the bearing assembly are suitable for use in a rolling mill, the rotating shaft being for example a rolling mill roll and the bearing assembly a housing or chock designed for supporting the rolling mill roll.

The foregoing objective is achieved according to the present invention by a bearing assembly for supporting a rotating shaft, such as for instance a roll cylinder, said bearing assembly comprising a housing adapted for being fixed to a stand, like a rolling mill stand, surrounding a first cylindrical element and a second cylindrical element, each able to move compared to the housing, the first cylindrical element being fix in rotation and able to move along an axial direction compared to the housing that is parallel to the rotation axis of the rotating shaft when the latter is supported by said bearing assembly, and said second cylindrical element being supported, in particular only supported, by said first cylindrical element, free in rotation and drivable in rotation by said rotating shaft when the latter is supported by the bearing assembly, and able to transmit the axial movement of the first cylindrical element along said axial direction to the rotating shaft. In particular, the second cylindrical element is configured for supporting and clamping said rotating shaft by means of said clamping system.

The present invention concerns as well a shank comprising a first part configured for being fixed to a rotating shaft and a second part for being clamped by a clamping system of a bearing assembly, the first part comprising a fixation system for fixing said first part to the end of the rotating shaft, and the second part comprising at least one complementary surface that has a geometry that is complementary to a geometry of a clamping system of a bearing assembly, preferentially, of a contact surface of a mobile element of said clamping system.

Finally, the present invention also claims a rotating shaft comprising the above-mentioned shank, which is advantageously removable from said rotating shaft, and a rolling mill comprising a bearing assembly and rotating shaft according to the invention.

Other objectives, features and advantages of the present invention will be now described in greater detail with reference to the drawings, wherein:
Figure 1 is a longitudinal sectional view of a bearing assembly and rotating shaft according to prior art;
Figure 2 is a longitudinal sectional view of a preferred embodiment of a bearing assembly and unclamped rotating shaft according to the invention;
Figure 3 is a longitudinal sectional view of a preferred embodiment of a bearing assembly and clamped rotating shaft according to the invention;
Figure 4 is a top view of a preferred embodiment of a second cylindrical element according to the invention;
Figure 5 is a radial sectional view of a preferred embodiment of the cylindrical head of the second cylindrical element according to the invention;
Figure 6 is a rear view of a preferred embodiment the cylindrical head of the second cylindrical element according to the invention;
Figure 7 is an illustration of a preferred embodiment of a plunger and cylinder according to the invention;
Figure 8 is an illustration of a preferred embodiment of a clamping system according to the invention.

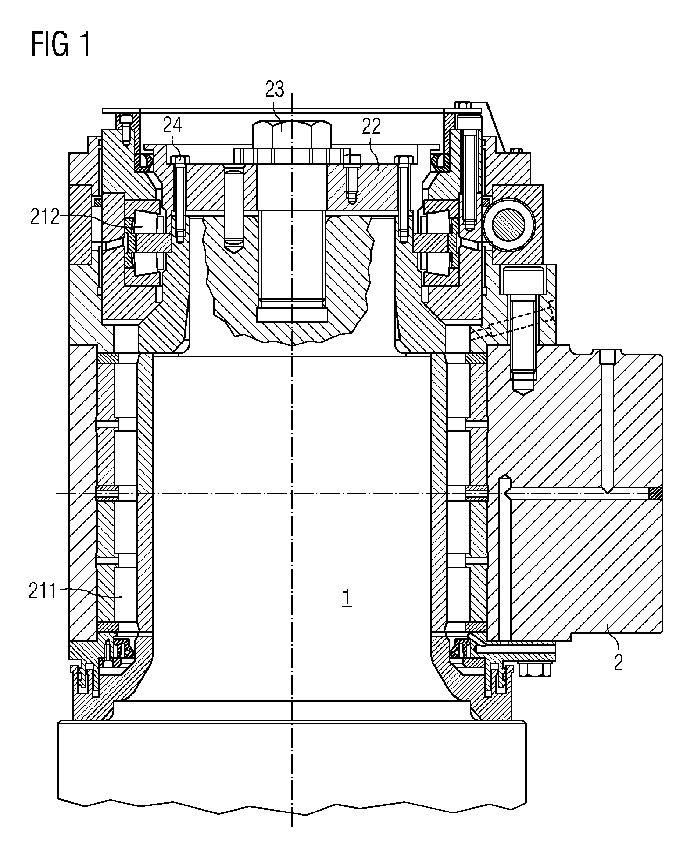

Figure 1 illustrates a longitudinal sectional view of a bearing assembly supporting a rotating shaft 1 according to prior art techniques. The rotating shaft 1 is mounted on bearings 211 and secured to a rotating flange 22 by mean of a central bolt 23. Additional smaller bolts 24 are used to secure the rotating flange 22 to an inner bush mounted on the rotating shaft tip end. An axial displacement of the rotating shaft 1 is limited by a small bearing 212 located in a non-rotating part 2 of the bearing assembly, said small bearing 212 having an inner race engaged between the flange 22 and the inner bush mounted on the rotating shaft. Such bearing assembly is typical for rolling stands, the rotating shaft being a rolling roll and the non-rotating 2 part being the bearing assembly housing.

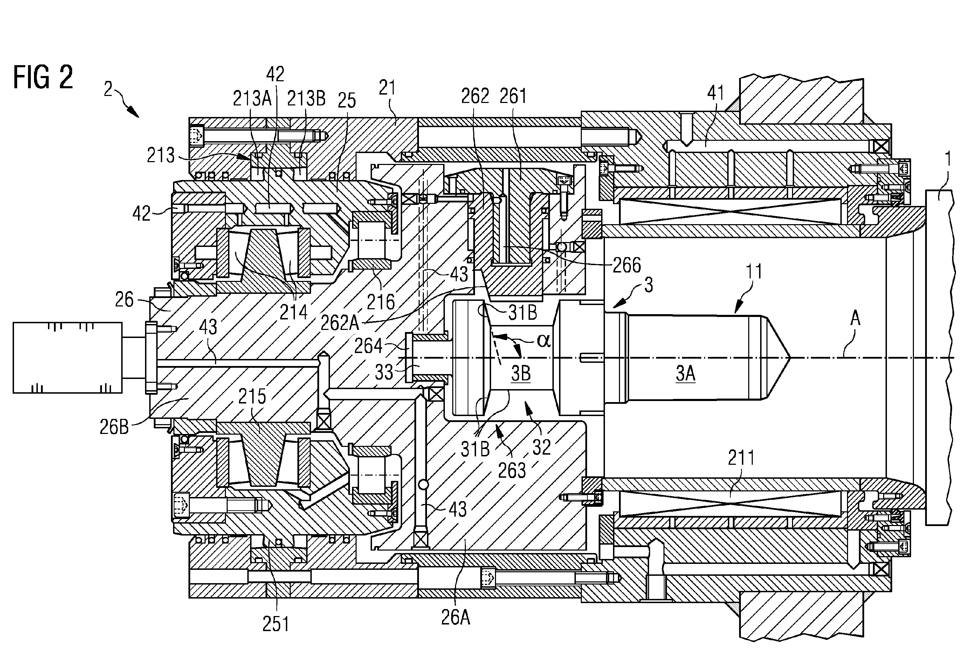

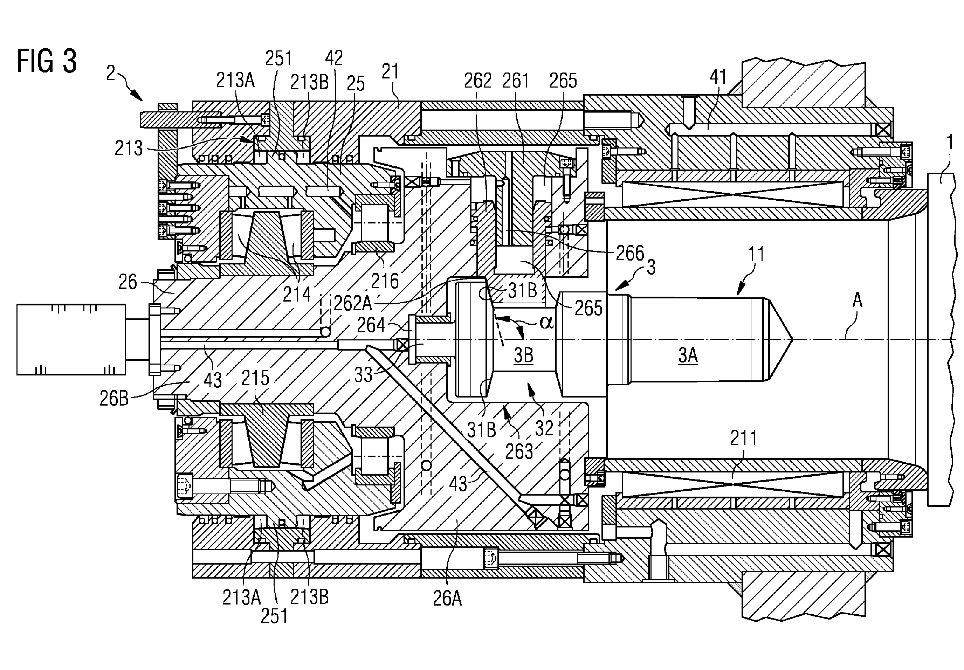

Figure 2 and 3 are longitudinal sectional views of a preferred embodiment of a rotating shaft 1 and a bearing assembly 2 according to the invention, wherein in Figure 2 the rotating shaft 1 is clamped to the bearing assembly 2 and in Figure 3, the rotating shaft 1 is unclamped from said bearing assembly 2.

The rotating shaft 1, which is for example of the type used in a rolling mill, comprises at one of its ends means for fixing or connecting a shank 3 to the end of said rotating shaft 1, so that the shank 3 might be fixed to the rotating shaft 1 in the continuation or extension of the rotation axis A of said rotating shaft 1. Preferentially, said means for fixing of the rotating shaft 1 are configured for cooperating with the fixation system of the shank 3. Said means for fixing of the rotating shaft 1 are for example a blind hole 11 drilled at least in one end of the rotating shaft 1, in particular centred on the rotation axis A of the rotating shaft and parallel to said rotation axis A, and comprising notably a thread designed for cooperating with a threaded part of the shank 3 so that e.g. the threaded part of the shank 3 might be screwed to the blind hole 11 of the rotating shaft 1. The fixation system of the shank 3 and the corresponding means for fixing of the rotating shaft 1 are notably configured for making the shank 3 and the rotating shaft 1 interdependent, so that they are able to rotate together at the same time when the shank 3 is fixed to the rotating shaft 1. Said blind hole 11 is in particular provided in a reduced diameter cylindrical section of the end of the rotating shaft 1, wherein the outer surface of said section is configured for being directly supported by and directly in contact with bearings 211 of the bearing assembly 2 when the rotating shaft 1 is seated in the bearing assembly 2. Providing the blind hole 11 in said section supported by said bearings 211 presents the advantages of increasing the stability of the rotating shaft 1 when it seats in the bearing assembly 2, simplifying the shank replacement operations in case of damages of the latter, as well as a minimization of the time and costs dedicated to shank 3 replacement. The shank 3 according to the present invention comprises a first part 3A and a second part 3B, the first part 3A being configured for being fixed to the end of the rotating shaft 1 by means of the fixation system and the second part 3B being designed for cooperating with a clamping system 261, 262 of the bearing assembly 2. The first part 3A comprises in particular at least one cylindrical threaded surface that is designed for being screwed to a complementary threaded surface of the rotating shaft 1 end, e.g. a threaded blind hole 11 of the rotating shaft end. The second part 3B has preferentially at least one complementary surface 31B that has a geometry that is complementary to the geometry of a contact surface 262A of a mobile element 262 of the clamping system 261, 262, notably when said mobile element 262 moves towards the complementary surface 31B according to a radial movement. The contact surface 262A of the mobile element 262 and the complementary surface 31B preferentially perfectly match when they are in contact due to their complementarities. For example, the shank 3 comprises in particular a turning 32, e.g. forming a circumferential slot, fitting a mobile element of the clamping system, in particular, fitting a prominence of the mobile element 262. For instance, the turning 32 has preferentially at least one side 31B, in form of a ring inclined surface, that is tilted according to an angle α compared to the rotation axis A of the rotating shaft 1 when said shank 3 is fixed to the rotating shaft 1, and that interfaces with the contact surface 262A.

The second part 3B is preferentially ended by a centring element 33 that is positioned in the alignment of the rotation axis A of the rotating shaft 1 when said shank 3 is fixed to the rotating shaft 1. For example, said centring element 33 is a cylindrical element situated in the prolongation of the rotation axis A of the rotating shaft 1 when said shank 3 is fixed/coupled to said rotating shaft 1, and configured for being mounted in a complementary cylindrical hole of the bearing assembly 2. Said cylindrical element 33 advantageously allows an alignment of the shank 3 and rotating shaft 1 with the bearing assembly 2. The shank 3 is therefore configured for having a first part 3A designed for being assembled with the rotating shaft 1, and a second part 3B for being clamped to a clamping system 261, 262 of the bearing assembly 2.

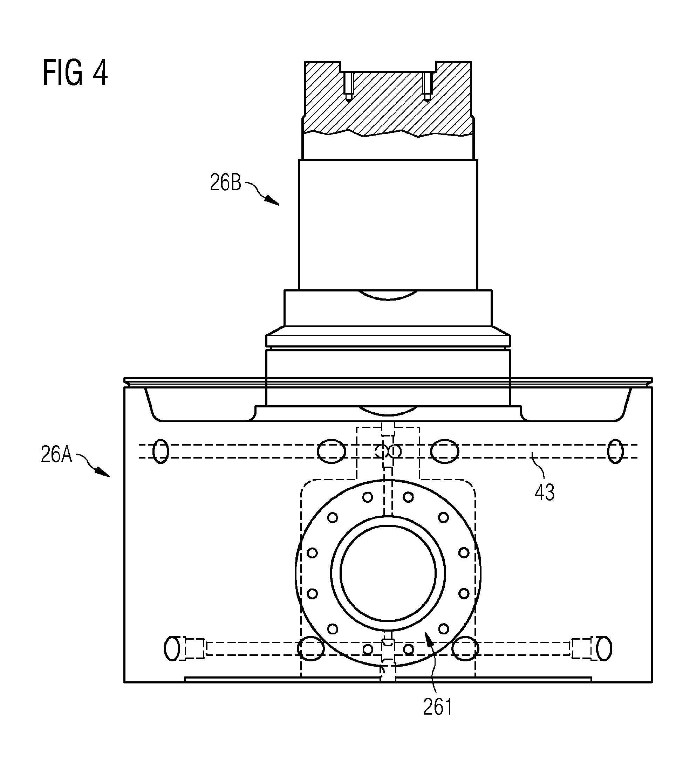

The bearing assembly 2 comprises a housing 21 that is preferentially adapted for being fixed to a stand, like a rolling mill stand, a first cylindrical element 25 and a second cylindrical element 26, each able to move compared to the housing 21, and which are surrounded by said housing 21, said housing 21 surrounding preferentially also the end of the rotating shaft 1. The second cylindrical element 26 comprises preferentially a cylindrical head 26A and a cylindrical rod 26B as shown in Figure 4, having a rotation axis configured for being in the continuation of the rotation axis A of the rotating shaft 1 when the latter is coupled/fixed to the bearing assembly 2, and wherein the cylindrical head 26A comprises in particular a blind hole 263 for housing the shank 3. The longitudinal section of the second cylindrical element 26 has therefore preferentially a Y-shape (see also Fig. 4), wherein the single-tip of the Y-shaped longitudinal section is a projection of said cylindrical rod 26B on a plan comprising the rotation axis A of the rotating shaft 1 when the latter in fixed to the bearing assembly 2, said single tip being in particular fitted into a longitudinal cylindrical cavity of the first cylindrical element 25 which has notably a hollow cylindrical shape comprising at its centre said longitudinal cylindrical cavity, said rod 26B being also in the continuation of the rotation axis A of the rotating shaft 1 when the latter is coupled to said bearing assembly 2, and the paired-tip of the Y-shaped longitudinal section is a projection of said cylindrical head 26A which is in particular positioned in said housing 21, between the first cylindrical element 25 and the rotating shaft 1. The space between said paired-tip of the Y-shaped longitudinal section is then a projection of said blind hole 263 of the cylindrical head 26A and is configured for receiving/hosting the above-mentioned shank 3, notably, said second part 3B of the shank 3.

The first cylindrical element 25 is preferentially fixed in rotation, but able to move axially, i.e. according to a movement parallel to the rotation axis A of the rotating shaft 1 when said shaft is supported/mounted into the bearing assembly 2, and the second cylindrical element 26 is configured for being moved axially by said first cylindrical element 25 and is free in rotation, so that it is able to rotate freely when it is free of coupling with the rotating shaft 1, and it is able to rotate at the same rotation speed as the rotating shaft 1 when it is coupled/clamped to said rotating shaft 1 by means of said shank 3.

The housing 21 comprises in particular means for axially moving the first cylindrical element 25. It comprises for example a blind hole or groove 213 designed for being separated in two hermetic chambers, respectively a first hermetic chamber 213A and a second hermetic chamber 213B, by a prominent part 251 of the first cylindrical element 25 which is configured for hermetically closing said blind hole or groove 213. Advantageously, said hermetic chambers 213A, 213B are configured for comprising pressurized fluid, like oil. Indeed, the hermetic chambers 213A, 213B comprise preferentially a fluid inlet and outflow, so that by changing the fluid pressure equilibrium between the hermetic chambers 213A, 213B, the first cylindrical element 25 might be moved forwards or backwards in an axial direction (i.e. a direction parallel to the rotation axis A of the rotating shaft 1 when the latter is seated in the bearing assembly 2). The axial movement of the first cylindrical element 25 is in particular mechanically transmitted to the second cylindrical element 26 by means of bearings, e.g. a single bi-directional thrust bearing comprising truncated conical rollers 214 surrounding between them a ring 215 (also called thrust ring) of trapezoidal section that is fixable to the rod 26B of the second cylindrical element 26, notably by means of a ring nut.

Preferentially, the housing 2 also comprises a bearing 211, e.g. a cylindrical roller bearing, that is configured for directly supporting the rotating shaft 1, preferentially the end of the rotating shaft 1 which comprises the above-mentioned means for fixing the shank 3.

The first cylindrical element 25 is in particular surrounded by said housing 2, and surrounds itself the rod 26B of the second cylindrical element 26. Preferentially, the first cylindrical element 25 comprises a cylindrical bearing 216 that surrounds and supports the rod 26B of the second cylindrical element 26. For example, said first cylindrical element 25 comprises a first bearing such as a paired single row tapered roller bearing, supporting the rod 26B of said second cylindrical element 26 at approximately half of the rod length, and a second bearing, such as a cylindrical roller bearing, supporting the rod 26B of the second cylindrical element 26 at it junction with the cylindrical head 26A of said second cylindrical element 26.

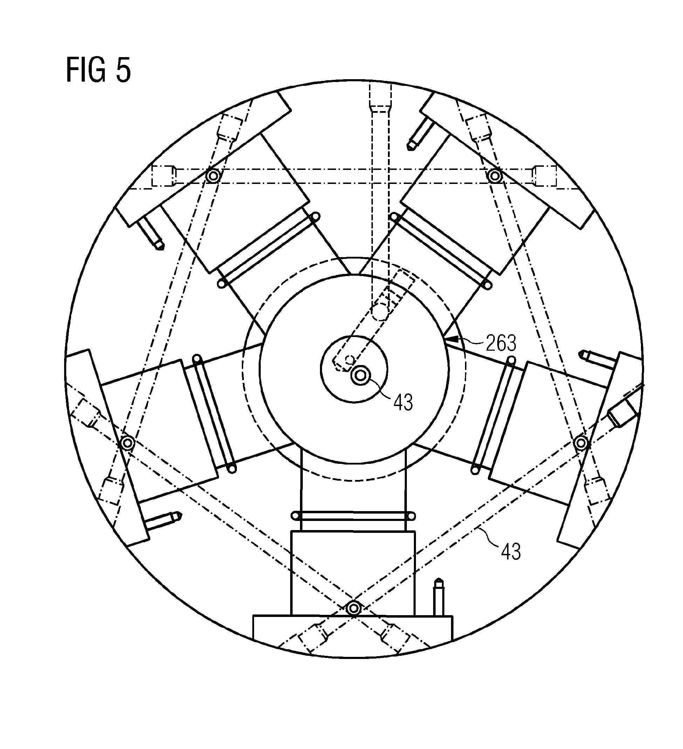

The second cylindrical element 26 is described in Figures 2-8. It comprises said cylindrical rod 26B and said cylindrical head 26A, and has preferentially said Y-shaped longitudinal section when projected on a plan comprising the rotation axis A of the rotating shaft 1 when the latter is mounted in the bearing assembly 2. The cylindrical rod 26B and the cylindrical head 26A have preferentially a rotation axis configured for being in the continuation of said rotation axis A of the rotating shaft 1 when said rotating shaft 1 is clamped by the clamping system 261, 262 of the second cylindrical element 26 on the shank 3 fixed to the end of the rotating shaft 1. The cylindrical rod 26B has in particular several sections of different diameters and is configured for fitting into the longitudinal cylindrical cavity of the first cylindrical element 25, and might be removed from said longitudinal cylindrical cavity of the first cylindrical element 25 by withdrawing said second cylindrical element 26. The cylindrical head 26A comprises in particular a clamping system 261, 262 for clamping the second part 3B of said shank 3 configured for being fixed in a removable manner the rotating shaft 1. In particular, the cylindrical head 26A comprises also a complementary cylindrical hole 264 that is adapted for surrounding a centring element 33 of the shank 3, for instance a cylindrical element situated in the prolongation of the rotation axis A of the shank 3, when said shank 3 is clamped to the second cylindrical element 26 by means of said clamping system.

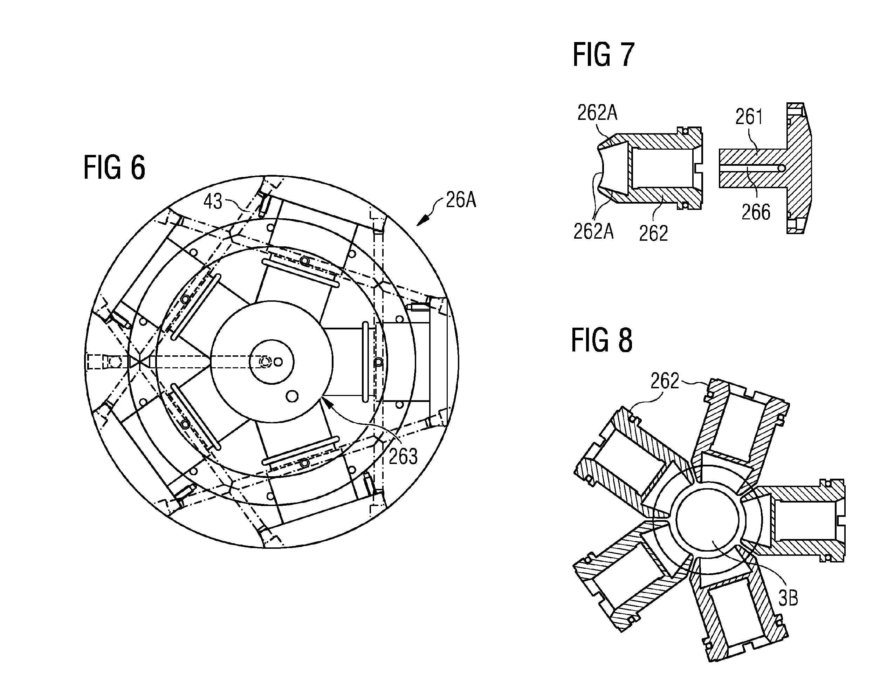

Preferentially, said clamping system comprises one or several mobile elements 262 that might be simultaneously actuated from a non-clamping position (shown in Fig. 2) to a clamping position (shown in Fig. 3), and inversely, notably according to a radial displacement of said mobile element 262 toward the blind hole 263 of the cylindrical head 26A, and inversely. In particular, in the clamping position shown in Fig. 3 or Fig. 8, said second part 3B of said shank 3 is tightly surrounded by said mobile elements 262, while in the non-clamping position shown in Fig. 2, said blind hole 263 is free of a presence of said mobile elements 262 since they have been withdrawn from the blind hole 263 of the cylindrical head 26A. Said non-clamping position advantageously allows a withdrawal of the second part 3B of the shank 3 out of said blind hole 263 of the cylindrical head 26A, while the clamping position allows a tight fixation of the shank 3 to the second cylindrical element 26.

Said mobile element 262 has preferentially a contact surface 262A that has a geometry that is complementary to the geometry of a complementary surface 31B of the second part of the shank 3. Said contact surface 262A of the mobile element 262 is in particular configured for contacting said complementary surface 31B of the shank 3 when said mobile element 262 is in the clamping position as shown in Fig. 8. For example, said mobile elements 262 are engageable in a turning 32. For this purpose, each mobile element 262 comprises preferentially a prominence that is configured for fitting the turning 32 of the shank 3, said turning 32 and said prominence comprising said complementary surfaces and contact surfaces. For instance, said turning 32 forms a circumferential slot, which has preferentially at least one side that is tilted according to an angle α and said prominence comprises a surface adjacent to said tilted side which is also tilted according to said angle α, said angle α being the angle that forms said tilted surface/side of the prominence/turning 32 with the rotation axis A of the rotating shaft 1 when said shank 3 is fixed to the rotating shaft 1 and to the second cylindrical element 26. Advantageously, when the mobile elements 262 tightly surround the second part 3B of the shank 3, then said second cylindrical element 26 is drivable into rotation by a rotation of the shank 3. Said mobile element 262 is for example a cylinder that is actuated between said non-clamping position and said clamping position by an actuation system, such as a hydraulic actuation system or an electric actuation system. Advantageously, in the clamping position, said cylinders are engaged in the shank turning 32 so as to prevent any axial movement of the connected rotating shaft 1 fixed to said shank 3, and moreover, they also allow the rotating shaft 1 to drive into rotation the second cylindrical element 26 by means of its shank 3 tightly clamped to the cylindrical head 26A by means of the clamping system 261, 262.

Preferentially, the clamping system comprises several mobile elements 262, e.g. cylinders, which are preferentially radially mounted in said cylindrical head 26A around its rotational axis in order to circumferentially lock the shank 3 when they are in said clamping position as shown in Fig. 8. By this way, the whole circumference of the shank 3 is advantageously in contact with the contact surface of the mobile element or more generally with the above-mentioned prominence and might be therefore tightly locked/maintained by said mobile elements 262. In particular, each mobile element 262 is pushed toward the shank 3 by means of a fluid, like oil, injected by the hydraulic actuation system in a fluid chamber 265 of the clamping system. The number of mobile elements 262 of the clamping system depends in particular on the outer diameter of the shank 3 at the clamping position of the mobile elements (e.g. five cylinders for a shank outer diameter of 100 mm at the clamping position, reaching 180 mm at the largest diameter of the complementary surface 31B, and characterized by a threaded part M130x2). The mobile elements 262 are in particular moved radially towards the shank 3 until they reach the clamping position characterized by a contact of the mobile element with the shank 3. Preferentially, the force exerted by the mobile element 262 on the shank 3, e.g. by each cylinder on the shank, might be controlled and tuned by the actuation system, e.g. by controlling a pressure value of the fluid of the hydraulic actuation system.

To unclamp the shank 3, and therefore the rotating shaft 1, the mobile element 262, for instance each cylinder, is moved by the actuation system from its clamping position to its non-clamping position. For this purpose, the actuation system is in particular capable of withdrawing the fluid comprised in the fluid chamber 265, so that the volume of the fluid chamber 265 of the clamping system is reduced and the mobile element 262, e.g. the cylinder, is moved radially back into the non-clamping position shown in Fig. 2 in order to release the shank 3. Consequently, the shank 3, in particular the shank turning 32, is then free and an axial movement of the shank 3 out of the blind hole 263 of the cylindrical head 26A is possible.

Preferentially, the actuation system is also able to control an axial displacement of the shank 3 and therefore an axial displacement of the rotating shaft 1 to which the shank 3 is fixed. For example, the actuation system is a hydraulic actuation system which is in particular able to inject, resp. withdraw, fluid, like oil, in, resp. from, the hermetic chambers 213A, 213B of the housing 2. For instance, when said fluid is injected in the first hermetic chamber 213A, then the fluid pressure in the first hermetic chamber 213A becomes higher than the fluid pressure in the second hermetic chamber 213B. The consequence of this change in the equilibrium of fluid pressure in the hermetic chambers is an axial movement of the prominent part 251 of the first cylindrical element 25 in direction of the second hermetic chamber 213B (i.e. towards the rotating shaft 1), wherein said fluid is withdrawn from said second hermetic chamber 213B as the volume of said second hermetic chamber 213B is decreased by the displacement of said prominent part 251, leading therefore to a displacement of the first cylindrical element 25 according to said axial movement which is parallel to the rotation axis A of the rotating shaft 1 when the latter is mounted in the bearing assembly 2. During its axial displacement, the first cylindrical element 25 pushes, notably by means of the single bi-directional thrust bearing 214, 215, the cylindrical rod 26B of the second cylindrical element 26 according to said axial direction parallel to the rotation axis A of the rotating shaft 1, and therefore, the second cylindrical element 26 and its clamping system, also move axially, and are able to transmit by the same way said axial movement to the rotating shaft 1 when the latter is attached to the second cylindrical element 26 by means of the shank 3 and clamping system.

Inversely, when said fluid is injected in the second hermetic chamber 213B, then the fluid pressure in the second hermetic chamber 213B becomes higher than the fluid pressure in the first hermetic chamber 213A. The consequence of this change in the equilibrium of fluid pressure in the hermetic chambers is an axial movement of the prominent part 251 of the first cylindrical element 25 in direction of the first hermetic chamber 213A (i.e. in a direction opposite to the rotating shaft 1), wherein said fluid is withdrawn from said first hermetic chamber 213A as the volume of said first hermetic chamber 213A is decreased by the displacement of said prominent part 251, leading therefore to a displacement of the first cylindrical element 25 according to said axial movement which is parallel to the rotation axis A of the rotating shaft 1 when the latter is mounted in the bearing assembly 2. During its axial displacement, the first cylindrical element 25 pushes, notably by means of its bearings, e.g. the single bi-directional thrust bearing 214, 215, the cylindrical rod 26B of the second cylindrical element 26 according to said axial direction parallel to the rotation axis A of the rotating shaft 1, and therefore, the second cylindrical element 26 and its clamping system, also move axially, and transmit by the same way said axial movement to the rotating shaft 1 when the latter is attached to the second cylindrical element 26 by means of its shank 3 clamped by the clamping system.

The housing 2, the first cylindrical element 25, and the second cylindrical element 26 comprise in particular and respectively, a duct network 41 for feeding each bearing and each hermetic chambers of the housing 2, a duct network 42 for feeding each bearing of the first cylindrical element 25, and a duct network 43 for feeding each fluid chamber of the clamping system.

Figure 7 shows a preferred embodiment of the mobile element 262. Indeed, the mobile element 262 is preferentially a U-shaped cylinder and is able to slide in a cavity of the second cylindrical element 26 that is hermetically closed by a plunger 261 and said U-shaped cylinder. In particular, said cavity of the second cylindrical element 26 hermetically closed by said U-shaped cylinder and the plunger 261 forms therefore said fluid chamber 265 of the clamping system. In particular, said plunger 261 has a shape of T, wherein the leg of the T is perpendicular to and radially oriented towards the rotation axis of the second cylindrical element 26, which is actually the same as the rotation axis A of the rotating shaft 1 when the latter is mounted in the bearing assembly 2. In particular, the inner part of the U-shaped cylinder is preferentially mounted sliding around said leg of the T-shaped plunger 261, so that said fluid chamber 265 is divided into three sub-chambers interconnected by a fluid duct 266 passing through the leg of the T-shaped plunger 261.

In summary, the present invention discloses a clamping mechanism for a rotating shaft, preferentially of the type used in rolling mill, which has the following advantages compared to prior art techniques:
- The bearing assembly, in particular the clamping system is fed by means of onboard piping, which avoids a use of special tools for mounting and dismounting said bearing assembly;
- The clamping system and the means for axially moving the rotating shaft are embedded in the bearing assembly and therefore are not affected by a withdrawing of a rotating shaft;
- Several different rotating shafts can be prepared off line with shanks mounted on them and then easily installed in the bearing assembly according to the invention;
- The clamping system and the means for axially adjusting the position of the rotating shaft does not require manual operation or third part means, such as screws, in order to fix and adjust the rotating shaft;
- The bearing assembly according to the invention might comprise an automatic control system for automating the clamping of the rotating shaft. Indeed, the steps for mounting a rotating shaft equipped with its shank in the bearing assembly can be automated, since the clamping might be performed free of manual steps. Preferentially, the bearing assembly according to the invention may comprise a self-centring system for a fully automated shaft change;
- The clamping system can be designed with different number of hydraulic clamping cylinders or different/no axial adjusting stroke.

## Claims

1. Bearing assembly (2) for supporting a rotating shaft (1), said bearing assembly (2) comprising a housing (21) adapted for being fixed to a stand, said housing (21) surrounding a first cylindrical element (25) and a second cylindrical element (26), each able to move compared to the housing (21), the first cylindrical element (25) being fix in rotation and able to move along an axial direction that is parallel to the rotation axis (A) of the rotating shaft (1) when the latter is supported by said bearing assembly (2), and said second cylindrical element (26) being supported by said first cylindrical element (25), free in rotation, and drivable in rotation by said rotating shaft (1) when the latter is supported by the bearing assembly (2), and able to transmit the axial movement of the first cylindrical element (25) along said axial direction to the rotating shaft (1) by means of a clamping system (261, 262).

2. Bearing assembly (2) according to claim 1, wherein the second cylindrical element (26) is configured for supporting and clamping said rotating shaft (1) by means of said clamping system (261, 262).

3. Bearing assembly (2) according to claim 1 or 2, **characterized in that** the second cylindrical element (26) comprises a cylindrical head (26A) and a cylindrical rod (26B) having a rotation axis configured for being in the continuation of the rotation axis (A) of the rotating shaft (1) when the latter is clamped to the bearing assembly (2).

4. Bearing assembly (2) according to claim 3, **characterized in that** the cylindrical rod (26B) is fitted into a longitudinal cylindrical cavity of the first cylindrical element (25).

5. Bearing assembly (2) according to one of the preceding claims, **characterized in that** the housing (21) comprises means for axially moving the first cylindrical element (25).

6. Bearing assembly (2) according to one of the claims 3 to 5, wherein the first cylindrical element (25) comprises a cylindrical bearing (216) that surrounds and supports the cylindrical rod (26B) of the second cylindrical element (26).

7. Bearing assembly (2) according to one of the claims 3 to 6, **characterized in that** the cylindrical head (26A) comprises the clamping system (261, 262) for clamping a second part (3B) of a shank (3) configured for being fixed in a removable manner to the rotating shaft (1).

8. Bearing assembly (2) according to one of the preceding claims, wherein the clamping system comprises one or several mobile elements (262) that might be simultaneously actuated from a non-clamping position to a clamping position, and inversely.

9. Bearing assembly (2) according to one of the preceding claims, wherein the mobiles elements (262) are radially mounted in said second cylindrical element (26).

10. Shank (3) comprising a first part (3A) configured for being fixed to a rotating shaft (1) and a second part (3B) for being clamped by a clamping system (261, 262) of a bearing assembly (2), the first part (3A) comprising a fixation system for fixing said first part (3A) to the end of the rotating shaft (1), and the second part (3B) comprising at least one complementary surface (31B) that has a geometry that is complementary to a geometry of a clamping system of a bearing assembly (2).

11. Shank (3) according to claim 10, **characterized in that** said second part comprises a turning (32) fitting a mobile element (262) of the clamping system.

12. Shank (3) according to one of the claims 10 or 11, **characterized in that** said second part (3B) is ended by a centring element (33) that is positioned in the alignment of the rotation axis (A) of the rotating shaft (1) when said shank (3) is fixed to the rotating shaft (1).

13. Rotating shaft (1) comprising the shank (3) according to one of the claims 10-12.

14. Rotating shaft (1) according to claim 13, **characterized in that** it comprises a threaded blind hole (11) provided in a reduced diameter cylindrical section of the end of the rotating shaft (1), wherein the outer surface of said section is configured for being directly supported by, and directly in contact with, bearings (211) of a bearing assembly (2) when the rotating shaft (1) is seated in said bearing assembly (2).

15. Rolling mill comprising a bearing assembly (2) according to one of the claims 1 to 9 and rotating shaft (1) according to one of the claims 10 to 14.
